(19) Europäisches Patentamt
European Patent Office
Office européen des brevets

(11) EP 3 538 400 B1

(12) # EUROPÄISCHE PATENTSCHRIFT

(45) Veröffentlichungstag und Bekanntmachung des Hinweises auf die Patenterteilung:
**09.12.2020 Patentblatt 2020/50**

(21) Anmeldenummer: **17787192.8**

(22) Anmeldetag: **24.10.2017**

(51) Int Cl.:
***B60R 13/08*** *(2006.01)* ***C08F 220/14*** *(2006.01)*
***C09D 133/08*** *(2006.01)* ***C08F 8/32*** *(2006.01)*
***C09D 5/02*** *(2006.01)*

(86) Internationale Anmeldenummer:
**PCT/EP2017/077067**

(87) Internationale Veröffentlichungsnummer:
**WO 2018/086861 (17.05.2018 Gazette 2018/20)**

(54) **ANTIDRÖHNMASSE MIT EMULSIONSPOLYMERISAT MIT ALKYLENIMINSEITENKETTEN**

ANTI-DRUMMING COMPOUNDS WITH EMULSION POLYMERS CONTAINING ALKYLENIMIN SIDE CHAINS

MATIÈRE ANTI-VROMBISSEMENT CONTENANT UN POLYMÉRISAT AVEC DES CHAINES LATÉRALES ALKYLENIMINES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2016 EP 16197766**

(43) Veröffentlichungstag der Anmeldung:
**18.09.2019 Patentblatt 2019/38**

(73) Patentinhaber: **BASF SE**
**67056 Ludwigshafen am Rhein (DE)**

(72) Erfinder:
- **DIMMER, Joerg-Alexander**
  **200137 Shanghai (CN)**
- **ZORN, Matthias**
  **67056 Ludwigshafen (DE)**
- **WULFF, Dirk**
  **67056 Ludwigshafen (DE)**
- **PREISHUBER-PFLUEGL, Peter**
  **67056 Ludwigshafen (DE)**

(74) Vertreter: **BASF IP Association**
**BASF SE**
**G-FLP-C006**
**67056 Ludwigshafen (DE)**

(56) Entgegenhaltungen:
**WO-A1-2015/018665 WO-A1-2015/086465**
**JP-A- H07 292 318**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 538 400 B1

## Beschreibung

Die Erfindung betrifft die Verwendung einer Polymerdispersion zur Herstellung von Antidröhnmassen, wobei die Polymerdispersion mindestens ein Polymer enthält welches erhältlich ist durch Emulsionspolymerisation von radikalisch polymerisierbaren Monomeren und das Polymer Alkyleniminseitenketten aufweist. Die Erfindung betrifft auch entsprechende Antidröhnmassen, welche die Polymerdispersion enthalten, sowie ein Verfahren zur Dämpfung von Vibrationen oder Schwingungen von Bauteilen von Fahrzeugen.

Durch Vibration oder Schwingungen von Bauteilen von Maschinen oder Fahrzeugen werden unerwünschte Geräusche erzeugt. Zur Geräuschminderung können die Bauteile mit sogenannten Antidröhnmassen, auch LASD-Massen (Liquid Applied Sound Damping) genannt, versehen werden. Schwingungsdämpfende Materialien sind beispielsweise beschrieben in Journal of Materials Science 36 (2001) 5733-5737, US 2004/0033354 und US 6502821. Die Ausrüstung von geometrisch komplexen, dreidimensionalen Bauteilen kann durch Aufsprühen einer Antidröhnmasse in Form einer wässrigen Dispersion erfolgen. Derartige Dispersionen enthalten in der Regel ein dispergiertes, viskoelastisches Polymer und anorganische Füllstoffe. Schwingungsdämpfende Zusammensetzungen auf Basis von wasserbasierten Polymerdispersionen und anorganischen Füllstoffen sowie weiterer Hilfsstoffe werden beschrieben in EP 1520865, WO 2007/034933, EP 2420412, WO 2012/010632, WO 2015/018665 und WO 2015/086465.

In JP 07-292318 wird eine Kombination von zwei bestimmten Polymeren und einem Isocyanatderivat als Vernetzer für Verwendungen in schwindungsdämpfenden Beschichtungen beschrieben. Als Isocyanatderivat können auch Aziridingruppen enthaltende Vernetzer verwendet werden.

Die Güte einer Antidröhnmasse kann durch Messung der Biegeschwingungen im Resonanzkurvenverfahren nach EN ISO 6721-1:2011 und EN ISO 6721-3:1996 gemessen werden. Ein Maß für die schwingungsdämpfende Wirkung ist der Verlustfaktor tan delta. Bei der Verwendung von Antidröhnmassen auf Basis von viskoelastischen Polymeren ist der Verlustfaktor temperaturabhängig. Es werden Materialien gewünscht, die zu einem möglichst großen Verlustfaktor in dem Temperaturbereich führen, in welchem die Maschinen oder Fahrzeuge üblicherweise betrieben werden, z.B. zwischen 0 und 40 °C.

Bei auf wässrigen Systemen beruhenden Antidröhnmassen stellt die Wasseraufnahme der getrockneten Massen bei Kontakt mit Feuchtigkeit besondere Herausforderungen dar. Beim Trocknen kann es zu einer unerwünschten Blasenbildung, der Bildung von mehr oder weniger großen Poren oder einer unerwünschten Expansion kommen.

Aufgabe der vorliegenden Erfindung war es, weitere Materialien für Antidröhnmassen auf Basis von wässrigen Polymerdispersionen zur Verfügung zu stellen mit guten schwingungsdämpfenden Eigenschaften und insbesondere einer verbesserten, möglichst geringen Wasseraufnahme der getrockneten Massen.

Es wurde gefunden, dass die in bekannten Antidröhnmassen auf Basis von wässrigen Polymerdispersionen enthaltenen, Säuregruppen aufweisenden polymeren Bindemittel in ihren technischen Eigenschaften verbessert werden können, wenn die polymeren Bindemittel Alkyleniminseitenketten aufweisen, z.B. durch Umsetzen der Säuregruppen mit mindestens einem cyclischen Imin, beispeislweise Aziridin oder Methylaziridin.

Der Begriff "Alkylenimin" umfasst Azacyclopropan (Ethylenimin) und alkylsubstituierte Azacyclopropane, z.B. Propylenimin.

Gegenstand der Erfindung ist daher die Verwendung einer Polymerdispersion zur Herstellung von Antidröhnmassen, wobei die Polymerdispersion mindestens ein Polymer enthält welches erhältlich ist durch Emulsionspolymerisation von radikalisch polymerisierbaren Monomeren und das Polymer Alkyleniminseitenketten aufweist, wobei die Alkyleniminseitenketten eine oder mehrere Alkylenimineinheiten aufweisen.. Die Alkyleninimseitenketten können z.B. in das Polymer eingeführt werden, indem das Polymer Säuregruppen aufweist, und die Säuregruppen zumindest teilweise oder ganz durch Umsetzung mit mindestens einem cyclischen Imin, ausgewählt aus beispielsweise Aziridin und Methylaziridin mit Alkylenimin, vorzugsweise Ethylenimin oder Propylenimin substituiert werden.

Die Alkyleniminseitenketten weisen vorzugsweise 1 bis 5, z.B. 1 bis 4, 1 bis 3 oder 1 bis 2 Alkylenimineinheiten auf.

Die Alkyleniminseitenketten weisen vorzugsweise die allgemeine Formel

$-(CH_2-CH_2-NH)_x-CH_2-CH_2-NH_2$ auf,

wobei x ein Zahlenwert von 0 bis 4, vorzugsweise 0 bis 3, 0 bis 2 oder 0 bis 1 ist.

Gegenstand der Erfindung ist auch eine Antidröhnmasse, enthaltend

(i) die hierin näher beschriebene Polymerdispersion;
(ii) anorganische Füllstoffe; und
(iii) optional organische Füllstoffe.

Gegenstand der Erfindung ist auch die Verwendung der Antidröhnmasse zur Schwingungsdämpfung von Karosserieteilen eines Fahrzeugs oder als Masse für Unterbodenschutz eines Kraftfahrzeugs sowie ein Verfahren zur Dämpfung von Vibrationen oder Schwingungen von Bauteilen von Fahrzeugen, wobei

(1) eine erfindungsgemäße Antidröhnmasse zur Verfügung gestellt wird, und
(2) die Antidröhnmasse auf ein Bauteil eines Fahrzeuges aufgebracht und getrocknet wird.

Das Polymer weist ein gewichtsmittleres Molekulargewicht von vorzugsweise größer oder gleich 100000, z.B. von mehr als 100000 und bis zu 350000 auf. Das gewichtsmittlere Molekulargewicht wird gemessen mittels Gelpermeationschromatographie (GPC) nach der Methode der Größenausschlusschromatographie (SEC). Dabei wird die Elutionskurve mit Hilfe einer Polystyrol-Eichkurve in die Molekulargewichtsverteilungskurve umgerechnet.

Im Folgenden wird die Bezeichnung "(Meth)acryl..." und ähnliche Bezeichnungen als abkürzende Schreibweise verwendet für "Acryl... oder Methacryl...". Der Ausdruck "Cx-Alkyl(meth)-acrylat" umfasst Alkylacrylate und Alkylmethacrylate mit x C-Atomen in der Alkylgruppe.

Bei den erfindungsgemäß einzusetzenden Polymerdispersionen handelt es sich um Dispersionen von Polymeren in wässrigem Medium. Bei dem wässrigen Medium kann es sich z.B. ausschließlich um Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 140 und 250 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Der pH-Wert der Polymerdispersion wird vorzugsweise auf pH größer 4 insbesondere auf einen pH-Wert zwischen 5 und 9 eingestellt.

Bei den durch Emulsionspolymerisation hergestellten Polymeren handelt es sich um Polymere, die durch radikalische Polymerisation von ethylenisch ungesättigten Verbindungen (Monomeren) erhältlich sind. Das Polymer ist aufgebaut vorzugsweise zu mindestens 40 Gew.% oder zu mindestens 60 Gew.%, oder zu mindestens 80 Gew.%, besonders bevorzugt zu mindestens 90 Gew.% oder zu 100 Gew.% aus einem oder mehreren der nachfolgend beschriebenen Hauptmonomeren. Die Hauptmonomeren sind vorzugsweise ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren. Die Mengenangaben beziehen sich auf die Summe aller Monomere des Polymers vor der Derivatisierung mit den Alkyleniminseitenketten.

Art und Menge der Monomeren sind vorzugsweise derart, dass die Glasübergangstemperatur des durch Emulsionspolymerisation hergestellten Polymers im Bereich von -60 °C bis kleiner oder gleich 70 °C oder im Bereich von -30 °C bis kleiner oder gleich 60 °C liegt, besonders bevorzugt im Bereich von -15 bis 50°C. Die Glasübergangstemperatur lässt sich bestimmen als sogenannte "midpoint temperature" durch Differential Scanning Calorimetrie (ASTM D 3418-08).

Geeignete Monomere sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutyl-ether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind z.B. Butadien, Isopren und Chloropren.

Als Hauptmonomere bevorzugt sind $C_1$- bis $C_{10}$-Alkylacrylate und $C_1$- bis $C_{10}$-Alkylmethacrylate, insbesondere $C_1$- bis $C_8$-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Hexylacrylat, Octylacrylat und 2-Ethylhexylacrylat, 2-Propylheptylacrylat, Styrol sowie Mischungen dieser Monomere. Insbesondere sind die Polymere zu mindestens 60 Gew.%, besonders bevorzugt zu mindestens 80 Gew.% und ganz besonders bevorzugt zu mindestens 90 oder zu mindestens 95 Gew.% aus $C_1$ bis $C_{10}$ Alkyl(meth)acrylaten aufgebaut.

Neben den Hauptmonomeren enthält das Polymer mindestens ein Säuremonomer. Säuremonomere sind Monomere, welche mindestens eine Säuregruppe aufweisen, z.B. ethylenisch ungesättigte Monomere mit Carbonsäure-, Sulfonsäure- oder Phosphonsäuregruppen. Bevorzugt sind Carbonsäuregruppen. Genannt seien z. B. Acrylsäure, Methacrylsäure, Itaconsäure, Maleinsäure oder Fumarsäure.

Die Säuremonomere werden vorzugsweise in einer Menge von mindestens 0,1 Gew.%, z.B. von 0,1 bis 5

Gew.%, oder von 0,3 bis 3 Gew.% eingesetzt, bezogen auf die Summe aller Monomere vor der Derivatisierung mit Alkyleniminseitenketten.

Neben den Hauptmonomeren und den Säuremonomeren kann das Polymer weitere Monomere enthalten, z.B. Hydroxylgruppen enthaltende Monomere, insbesondere $C_1$-$C_{10}$-Hydroxyalkyl-(meth)acrylate oder (Meth)acrylamid. Als weitere Monomere seien darüber hinaus Phenyloxy-ethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf.

In einer Ausführungsform ist das Polymer aufgebaut aus

(a) 25 bis 75 Gew.%, vorzugsweise 30 bis 70 Gew.% mindestens eines Monomeren, welches, wenn es als Homopolymer polymerisiert ist, eine Glasübergangstemperatur von kleiner als 0°C, vorzugsweise von kleiner als -20°C aufweist, z.B. n-Propylacrylat, n-Butylacrylat, n-Hexylacrylat, 2-Ethylhexylacrylat;

(b) 24 bis 75 Gew.% ,vorzugsweise 29 bis 70 Gew.% mindestens eines Monomeren, welches, wenn es als Homopolymer polymerisiert ist, eine Glasübergangstemperatur von größer als 0°C, vorzugsweise von größer als 50°C aufweist, z.B. Methylacrylat, tert.-Butylacrylat, Methylmethacrylat, Ethylmethacrylat, n-Butylmethacrylat, iso-Butylmeth-acrylat, tert.-Butylmethacrylat, Acrylnitril, Methacrylnitril, Styrol, Vinylacetat, (Meth)-acrylamid; und

(c) 0,1 bis 5 Gew.%, vorzugsweise 0,3 bis 3 Gew.% mindestens eines von den Monomeren (a) und (b) verschiedenen Monomeren mit mindestens einer Säuregruppe (Säuremonomere).

Ein besonders bevorzugtes Polymer ist aufgebaut aus

(a) 25 bis 75 Gew.% n-Butylacrylat

(b) 24 bis 70 Gew.% Methyl(meth)acrylat

(c) 0,3 bis 3 Gew.% mindestens eines Säuremonomers ausgewählt aus Acrylsäure, Methacrylsäure und deren Gemisch.

Die Herstellung der Polymere kann durch Emulsionspolymerisation erfolgen, es handelt sich dann um ein Emulsionspolymerisat. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Geeignete Emulgatoren sind beispielsweise ethoxylierte $C_8$- bis $C_{36}$- oder $C_{12}$- bis $C_{18}$-Fettalkohole mit einem Ethoxylierungsgrad von 3 bis 50 oder von 4 bis 30, ethoxylierte Mono-, Di- und Tri- $C_4$- bis $C_{12}$- oder $C_4$- bis $C_9$-Alkylphenole mit einem Ethoxylierungsgrad von 3 bis 50, Alkalimetallsalze von Dialkylestern der Sulfobernsteinsäure, Alkalimetall- und Ammoniumsalze von $C_8$- bis $C_{12}$-Alkylsulfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Kationaktive Emulgatoren sind z.B. Verbindungen mit mindestens einer Amino- oder Ammoniumgruppe und mindestens einer $C_8$-$C_{22}$-Alkylgruppe.

Weitere geeignete Emulgatoren sind Verbindungen der allgemeinen Formel

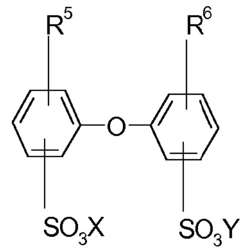

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium

besonders bevorzugt ist. Besonders vorteilhaft sind Verbindungen, in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax®2A1. Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z. B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol® VSL, Emulphor® NPS 25. Geeignet sind auch copolymerisierbare Emulgatoren, welche eine radikalisch polymerisierbare, ethylenisch ungesättigte Doppelbindung enthalten, z.B. reaktive anionische Emulgatoren wie Adeka® Resoap SR-10.

Die Emulsionspolymerisation erfolgt in der Regel bei 30 bis 130, vorzugsweise 50 bis 95 °C oder 50 bis kleiner 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Die Emulsionspolymerisation kann in Gegenwart mindestens eines Schutzkolloids durchgeführt. Das bedeutet, dass die Schutzkolloide vorgelegt oder zusammen mit Monomeren dem Polymerisationsgefäß zugeführt werden. Sie werden vorzugsweise bei der Emulsionspolymerisation vorgelegt, während gegebenenfalls zusätzlich eingesetzte Emulgatoren zusammen mit den Monomeren auch im Laufe der Polymerisation zugeführt werden können.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z.B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Molekulargewichtsregler eingesetzt werden, z. B. in Mengen von 0 bis 0,8 Gew.-Teile, bezogen auf 100 Gew.-Teile der zu polymerisierenden Monomeren, wodurch die Molmasse verringert wird. Geeignet sind z. B. Verbindungen mit einer Thiolgruppe wie tert.-Butylmercaptan, Thioglycolsäureester, z.B. 2-Ethylhexylthioglycolat (EHTG), Mercaptoethanol, Mercaptopropyltrimethoxysilan, n-Dodecylmercaptan oder tert.-Dodecylmercaptan (t-DMK). Bevorzugt sind EHTG oder t-DMK. Weiterhin können Regler ohne Thiolgruppe verwendet werden, wie z.B. C6- bis C20-Kohlenwasserstoffe, welche bei Wasserstoffabstraktion ein Pentadienylradikal bilden, z.B. Terpinolen. In einer Ausführungsform ist das Emulsionspolymerisat hergestellt unter Verwendung von 0,05 bis 0,7 Gew.% oder von weniger als 0,6 Gew.%, bezogen auf die Monomermenge, an mindestens einem Molekulargewichtsregler. Die erfindungsgemäß einzusetzenden Polymere weisen (vor der Derivatisierung mit Alkyleniminseitenketten, bzw. vor Umsetzung mit Alkylenimin) vorzugsweise bestimmte gewichtsmittlere Molekulargewichte aus. Polymere mit einem gewichtsmittleren Molekulargewicht von größer 100000 führen bei Verwendung in Antidröhnmassen zu einer signifikant weiter reduzierten Wasseraufnahme. Die Einstellung von erfindungsgemäßen Molekulargewichten kann durch eine oder mehrere der folgenden Maßnahmen erfolgen:

- dadurch, dass bei der Emulsionspolymerisation Molekulargewichtsregler in einer Menge von weniger als 0,6 Gewichtsteilen auf 100 Gewichtsteile Monomere oder keine Molekulargewichtsregler eingesetzt werden; und /oder
- dadurch, dass die Emulsionspolymerisation bei relativ niedrigen Temperaturen, z.B. bei Temperaturen kleiner 90 °C durchgeführt wird; und/oder
- dadurch dass bei der Emulsionspolymerisation Initiatoren (z.B. Natriumperoxodisulfat) in einer Menge von 0,1 bis weniger als 0,8 Gewichtsteilen auf 100 Gewichtsteile Monomere eingesetzt werden; und/oder
- dadurch, dass bei der Emulsionspolymerisation keine oder nur wenig vernetzende Monomere (z.B. 1,4-Butandioldiacrylat), z.B. in einer Menge von weniger als 0,2 Gewichtsteilen auf 100 Gewichtsteile Monomere eingesetzt werden.

In einer Ausführungsform erfolgt die Emulsionspolymerisation einstufig und/oder ohne Schutzkolloid.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

In einer Ausführungsform weist das Polymer eine Kern-Schale Morphologie auf oder ist durch mindestens zweistufige Polymerisation herstellbar, wobei die Glasübergangstemperatur des den Kern bildenden Polymers (A) um mindestens 10°C, vorzugsweise um mindestens 15°C oder mindestens 20 °C, z.B. um 10 bis 50°C verschieden ist von der Glasübergangstemperatur des die Schale bildenden Polymers (B), bzw. wobei die Glasübergangstemperatur des bei der ersten Polymerisationsstufe entstehenden Polymers (B) von der Glasübergangstemperatur des bei der zweiten Polymerisationsstufe (A) entstehenden Polymers um mindestens 10°C, vorzugsweise um mindestens 15°C oder mindestens 20 °C, z.B. um 10 bis 50°C verschieden ist. Diese Ausführungsform betrifft also wässrige Polymerdispersionen, worin die Polymerteilchen mindestens zwei voneinander verschiedene Polymerphasen (A) und (B) mit unterschiedlichen Glasübergangstemperaturen aufweisen. Dies hat den Vorteil, dass damit hergestellte Antidröhnmassen in einem größeren Temperaturbereich schwingungsdämpfende Wirkungen besitzen. Vorzugsweise ist die Glasübergangstemperatur des Kerns größer als die Glasübergangstemperatur der Schale.

Bei den Kern-Schale-Partikeln ist die Oberfläche des Kerns ganz oder mindestens teilweise mit den die Schale bildenden Polymeren bedeckt. Kern-Schale-Partikel haben vorzugsweise einen durchschnittlichen Teilchendurchmesser von 10 nm bis 1 Mikrometer oder von 20 nm bis 500 nm, messbar mit einem dynamischen Lichtstreuungsphotometer. Sowohl bei Polymer (A) als auch bei dem davon verschiedenen Polymer (B) handelt es sich vorzugsweise um Acrylatcopolymere, wobei Art und Menge der Monomeren so sind, dass die Mindestdifferenz der Glasübergangstemperaturen gewährleistet ist. Geeignete Acrylatcopolymere zur Bildung von mindestens zweiphasigen Polymerteilchen sind z.B. beschrieben in WO 2007/034933, EP 1520865 und DE19954619.

Polymerdispersionen mit mindestens zweiphasigen Polymerteilchen sind vorzugsweise erhältlich durch radikalische wässrige Emulsionspolymerisation umfassend die folgenden Schritte:

a) Polymerisation einer ersten Monomercharge M1 zu einem Polymer P1 mit einer theoretischen Glasübergangstemperatur Tg(1) (nach Fox) und

b) Polymerisation einer zweiten Monomercharge M2 zu einem Polymer P2 mit einer von Tg(1) verschiedenen, theoretischen Glasübergangstemperatur Tg(2) (nach Fox) in der wässrigen Dispersion des Polymeren P1,

wobei vorzugsweise entweder bei der Polymerisation der Monomercharge M1 oder bei der Polymerisation der Monomercharge M2 wenigstens ein Kettenübertragungsreagenz eingesetzt wird.

Unter einer theoretischen Glasübergangstemperatur versteht man hier und im Folgenden die nach Fox aufgrund der Monomerzusammensetzung der Monomercharge M1 bzw. der Monomercharge M2 berechnete Glasübergangstemperatur Tg(1) bzw. Tg(2). Nach Fox (T.G. Fox, Bull. Am. Phys. Soc. (Ser. II) 1, 123 [1956] und Ullmann's Enzyklopädie der technischen Chemie, Weinheim (1980), S. 17, 18) gilt für die Glasübergangstemperatur von Mischpolymerisaten bei großen Molmassen in guter Näherung

$$1/Tg = x1/Tg(1) + x2/Tg(2) + ... + xn/Tg(n)$$

wobei x1, x2, ... xn die Massenbrüche 1, 2, ..., n und Tg(1), Tg(2), ..., Tg(n) die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Erfindungsgemäß bevorzugt wird die Monomercharge M2 so gewählt, dass die theoretische Glasübergangstemperatur (nach Fox) der resultierenden Polymerphase P2 oberhalb der theoretischen Glasübergangstemperatur des zuerst hergestellten Polymeren P1 liegt. Bevorzugt weist dann die Monomercharge M2 eine Zusammensetzung auf, die zu einer theoretischen Glasübergangstemperatur Tg(2) der Polymerphase P2 führt, die oberhalb 30 °C, vorzugsweise oberhalb 40 °C und insbesondere im Bereich von 50 bis 120 °C liegt. Die Monomercharge M1 weist für den Fall, dass Tg(2) größer als Tg(1) ist, vorzugsweise eine Monomerzusammensetzung auf, die zu einer theoretischen Glasübergangstemperatur Tg(1) der resultierenden Polymerphase P1 führt, die im Bereich von -40 bis +40 °C, vorzugsweise im Bereich von -30 bis +30 °C und ganz besonders bevorzugt im Bereich von -10 bis +25 °C liegt. Sofern Tg(1) größer als Tg(2) ist, gilt für die bevorzugten Glasübergangstemperaturen der Polymerphase P1 das zuvor für P2 im Falle von Tg(2) größer Tg(1) gesagte. Für die Glasübergangstemperaturen der Polymerphase P2 gilt dann entsprechend das zuvor für Tg(1) gesagte.

In den erfindungsgemäßen Polymerdispersionen liegt das Gewichtsverhältnis der Polymerphasen zueinander im Bereich von 20 : 1 bis 1 : 20, vorzugsweise 9 : 1 bis 1 : 9. Erfindungsgemäß werden solche Polymerdispersionen bevorzugt, worin der Anteil an Polymerphase mit der niedrigen Glasübergangstemperatur überwiegt. Sofern P1, wie erfindungsgemäß bevorzugt, die niedrigere Glasübergangstemperatur aufweist, liegt das Verhältnis P1 : P2 insbesondere im Bereich von 1 : 1 bis 5 : 1 und besonders bevorzugt im Bereich von 2 : 1 bis 4 : 1. Die Gewichtsverhältnisse der Polymerphasen P1 und P2 entsprechen dabei näherungsweise den Mengenverhältnissen der Monomerchargen M1 und M2. Im Falle von Tg(1) größer Tg(2) liegen die Mengenverhältnisse P1 : P2 insbesondere im Bereich von 1 : 1 bis 1 : 5 und besonders bevorzugt im Bereich von 1 : 2 bis 1 : 4.

In die säurehaltigen Emulsionspolymerisate werden Alkyleniminseitenketten, vorzugsweise Ethyleniminseitenketten eingeführt. Dies kann durch Umsetzung mit geeigneten cyclischen Iminen (Alkyleniminen) wie z.B. Aziridin oder Methylaziridin erfolgen.

Alkylenimineinheiten können polymere oder oligomere Strukturen aufweisen die sich z.B. im Falle von Ethylenimin von Einheiten $(-CH_2-CH_2-NR-)_n$ ableiten können, wobei R Wasserstoff oder eine Verzweigung mit einer oder mehreren weiteren Ethylenimineinheiten bedeutet und n ein Zahl von mindestens 2 ist.

Bei der Umsetzung der Säuregruppen enthaltenden Polymere mit Alkyleniminen beträgt das molare Verhältnis von Säuregruppen zu Alkylenimin vorzugsweise von 0,1 bis 3. Die Umsetzung mit Aziridin kann z.B. erfolgen, indem eine wässrige Lösung von Aziridin unter Erwärmen (z.B. auf 40 bis 80 °C) zu einer Polymerdispersion zugegeben wird. Die resultierenden Polymerdispersionen haben vorzugsweise einen pH-Wert zwischen 7 und 10, z.B. von 8 bis 9.

Gegenstand der Erfindung ist auch eine Antidröhnmasse, enthaltend

(i) eine oben näher beschriebene Polymerdispersion, enthaltend mindestens ein durch Emulsionspolymerisation von radikalisch polymerisierbaren Monomeren erhältliches, in Wasser dispergiertes Polymer, welches Alkyleniminseitenketten aufweist;
(ii) anorganische Füllstoffe; und
(iii) optional organische Füllstoffe.

Vorzugsweise enthält die Antidröhnmasse

(a) 5 bis 50 Gew.%, vorzugsweise 5 bis 20 Gew.% der Polymerdispersion, wobei sich die Mengenangabe auf den Feststoffgehalt der Polymerdispersion bezieht,
(b) 40 bis 80 Gew.%, vorzugsweise 60 bis 70 Gew.% anorganische Füllstoffe,
(c) 0 bis 40 Gew.%, vorzugsweise 5 bis 20 Gew.% organische Füllstoffe,
(d) 10 bis 40 Gew.%, vorzugsweise 23 bis 28 Gew.% Wasser und
(e) 0 bis 10 oder 0 bis 5 Gew.%, vorzugsweise 0,1 bis 3 Gew.% Hilfsstoffe.

Geeignete anorganische Füllstoffe sind z.B. Calciumcarbonat, Kaolin, Mica, Silica, Kreide, Mikrodolomit, Quarzmehl, Glimmer, Talkum, Ton, Bariumsulfat, Tonerde, Eisenoxid, Titandioxid, Glaspulver, Glasschuppen, Magnesiumcarbonat, Aluminiumhydroxid, Bentonit, Flugasche, Kiselguhr, Perlit, Ruß, Graphit, Tonmineralien, Mikrodolomit, Quarzmehl und Glimmer. Bevorzugt werden schuppenförmige Füllstoffe wie z.B. Mica eingesetzt, allein oder in Kombination mit gewöhnlichen anorganischen Pigmenten wie Calciumcarbonat, Bariumsulfat, Kaolin, Silica, Kreide oder Talkum.

Geeignete organische Füllstoffe sind z.B. Pulverlacke, z.B. Epoxypulverlacke, Polymerpulver aus zum Beispiel gemahlenen Ethylen/Vinylacetat Copolymer (EVA)-Festharzen, getrockneten Acrylatdispersionen und Polysaccharide.

Vorzugsweise werden 50 bis 700 oder 100 bis 550 Gewichtsteile anorganischer Füllstoff auf 100 Gewichtsteile

Polymerdispersion eingesetzt, wobei vorzugsweise 30 bis 150 oder 40 bis 120 Gewichtsteile schuppenförmige Füllstoffe auf 100 Gewichtsteile Polymerdispersion eingesetzt werden.

Hilfsstoffe, die vorzugsweise zu mindestens 0,1 Gew.%, z.B. von 0,1 bis 10 Gew.% oder von 0,2 bis 5 Gew.% oder von 0,2 bis 3 Gew.% eingesetzt werden sind z.B. Verdickungsmitteln, Harze, Weichmacher, Dispergiermittel, Cosolventien, Stabilisatoren, Benetzungsmittel, Konservierungsstoffe, Schauminhibitoren, Glas- oder Kunststoffperlen, Glas- oder Kunststoffhohlkörper, Gefrierschutzmittel, Antioxidantien, UV-Absorber, Epoxypulverlacke, Emulgatoren, Siloxane, organisch modifizierte Siloxane und Antistatika. Von den Hilfsstoffen können eines, zwei oder mehrere in Kombination eingesetzt werden. Geeignete Cosolventien sind z.B. Ethylenglykol, Diethylenglykol, Ethylenglykolalkylether (z.B. Cellosolve®-Typen), Diethylenglykolalkylether (z.B. Carbitol®-Typen), Carbitolacetat, Butylcarbitolacetat oder deren Mischungen. Verdickungsmittel sind z.B. Polyvinylalkohole, Cellulosederivate, Polyacrylsäuren oder Acrylsäure/Acrylatester Copolymere in Mengen von z.B. 0,01 bis 4 oder von 0,05 bis 1,5 oder von 0,1 bis 1 Gewichtsteilen, bezogen auf 100 Gewichtsteile Feststoff. Dispergiermittel sind z.B. Natriumhexametaphosphat, Natriumtripolyphosphate, oder Polycarbonsäuren. Gefrierschutzmittel sind z.B. Ethylenglykol oder Propylenglykol. Schauminhibitoren sind z.B. Silikone. Stabilisatoren sind z.B. polyvalente Metallverbindungen wie Zinkoxid, Zinkchlorid oder Zinksulfat.

Das Maximum des Verlustfaktors tan delta liegt bei erfindungsgemäßen Antidröhnmassen vorzugsweise im Bereich von -30 bis +60°C. Im Falle der Verwendung von Kern-Schale-Partikeln oder von anderen Partikeln mit mehrphasiger Partikelstruktur, wobei die verschiedenen Polymerphasen unterschiedliche Glasübergangstemperaturen haben, gibt es in der Regel mindestens zwei Maxima des Verlustfaktors bei mindestens zwei verschiedenen Temperaturen. In diesem Fall liegen vorzugsweise alle Maxima des Verlustfaktors im Bereich von -30 bis +60 °C.

Gegenstand der Erfindung ist auch die Verwendung einer erfindungsgemäßen Antidröhnmasse zur Schwingungsdämpfung von Karosserieteilen eines Fahrzeugs oder als Masse für Unterbodenschutz eines Kraftfahrzeugs sowie ein Verfahren zur Dämpfung von Vibrationen oder Schwingungen von Bauteilen von Fahrzeugen, wobei

(1) eine oben näher beschriebene Antidröhnmasse mit einem Gehalt an einer erfindungsgemäß einzusetzenden Polymerdispersion zur Verfügung gestellt wird, und
(2) die Antidröhnmasse auf ein Bauteil eines Fahrzeuges aufgebracht und getrocknet wird.

Das Aufbringen kann auf übliche Art erfolgen, z.B. durch Streichen, Rollen oder Sprühen. Die aufgebrachte Menge ist vorzugsweise von 1 bis 7 kg/m$^2$ oder von 2 bis 6 kg/m$^2$ nach Trocknen. Das Trocknen kann bei Umgebungstemperatur oder vorzugsweise durch Anwendung von Wärme erfolgen. Die Trocknungstemperaturen sind vorzugsweise von 80 bis 210°C oder von 90 bis 180 °C oder von 120 bis 170 °C.

Die Antidröhnmasse kann beispielsweise angewendet werden in Fahrzeugen aller Art, insbesondere Straßenkraftfahrzeugen, Automobilen, Schienenfahrzeugen aber auch in Schiffen, Flugzeugen, elektrischen Maschinen, Baumaschinen und Gebäuden.

Die erfindungsgemäßen Antidröhnmassen haben gute anwendungstechnische Eigenschaften hinsichtlich guter Auftragbarkeit, guten schwingungsdämpfenden Eigenschaften, gutem Trocknungsverhalten und geringer Wasseraufnahme der getrockneten Massen.

Beispiele

Einsatzstoffe:

| | |
|---|---|
| AS: | Acrylsäure |
| DAAM: | Diacetonacrylamid |
| n-BA: | n-Butylacrylat |
| MA: | Methylacrylat |
| ADDH: | Adipinsäuredihydrazid |
| SDS: | Natriumdodecylsulfat (Emulgator) |
| EHTG: | Ethylhexylthioglycolat (Molekulargewichtsregler) |
| t-DMK: | ter.-Dodecylmercaptan |
| Tg: | Glassübergangstemperatur |

**Beispiele P1 bis P5 : Herstellung der Polymerdispersionen**

Die Dispersionen wurden nach folgendem Verfahren hergestellt:
Es wurden Emulsionspolymerisate mittels semikontinuierlicher Emulsionspolymerisation hergestellt. Der theoretische Feststoffgehalt wurde zu Beginn auf 55% eingestellt. Die Monomerzusammensetzung in Gewichtsprozent - bezogen auf die Summe aller Monomerer - ist in nachfolgender Tabelle aufgeführt.

Tabelle 1: Polymerzusammensetzungen

| | AS | MA | BA | DAAM | ADDH | Tg (berechnet) |
|---|---|---|---|---|---|---|
| P1 | 0,5 | 53,5 | 46 | 0 | 0 | -12 °C |
| P2 | 0,5 | 53 | 46 | 0,5 | 0,25 | -12 °C |
| P3 | 1,4 | 52,6 | 46 | 0 | 0 | -11 °C |
| P4 | 0,7 | 75 | 24,3 | 0 | 0 | 4 °C |
| P5 | 0,5 | 74,5 | 24,5 | 0,5 | 0,25 | 4°C |

Die Herstellung erfolgte bei 90°C untere paralleler Zuführung einer zuvor hergestellten Präemulsion aus Wasser, SDS, 0,5 Gewichtsprozent bezogen auf die Summe aller Monomere EHTG oder t-DMK und den Monomeren, sowie einer wässrigen Lösung des Initiators Natriumpersulfat. Am Ende wurde der pH mittels NaOH-Lösung auf ca. 7 eingestellt.

**Beispiele PA1, PA2 und PA3**

Die Dispersionen P1, P3 und P4 wurden aufgeteilt und ein Teil wurde in der im Folgenden beschriebenen Weise mit 1 eq Aziridin bezogen auf die eingesetzte Säuremenge umgesetzt. Die resultierenden Dispersionen sind mit PA1, PA3 und PA4 bezeichnet. Dafür wurden die Ausgangsdispersionen auf 60°C aufgeheizt und das Ethylenimin als 60%-ige wässrige Lösung zugegeben. Dann wurde 24h bei 60 °C gerührt. Die resultierenden Dispersionen hatten einen pH-Wert zwischen 8-9.

**Beispiele für Antidröhnmassen**

Es wurden Antidröhnmassen mit folgender Zusammensetzung hergestellt:
3,01 g Propylenglykol (100%), 1,2 g Dispex® Ultra PA 4580 (40%, hochmolekulares Dispergierhilfsmittel), 0,28 g Lumiten® ISC (58%, Emulgator), 0,17 g Hydropalat® WE 3475 (48%, Benetzungsmittel), 0,80 g Hexamoll® DINCH® (100%, Weichmacher), 33,7 g Bariumsulfat (100%), 29,7 g Omyacarb® 15 GU (100%, Calciumcarbonat), 4,8 g Epoxypulverlack (100 %), 0,54 g Rheovis® AS1130 (30%, Acrylcopolymer, Verdicker). Des Weiteren wurden die oben beschriebenen Dispersionen in den in folgender Tabelle aufgeführten Mengen eingesetzt. Die Feststoffgehalte der Dispersionen sind in der obersten Zeile angegeben. Der Feststoffgehalt der Masse wurde mit Wasser auf 85% eingestellt.

Tabelle 2 Antidröhnmassen

| | P1 55,5% | P2 54,7% | P3 55,0% | P4 54,5% | P5 54,0% | PA1 56,2% | PA3 54,8% | PA4 54,2% |
|---|---|---|---|---|---|---|---|---|
| A1 | 21,7 g | | | | | | | |
| A2 | | | | | | 21,4 g | | |
| A3 | | 22,0 g | | | | | | |
| A4 | | | 21,9g | | | | | |
| A5 | | | | | | | 22,0 | |
| A6 | | | | 22,1 | | | | |
| A7 | | | | | 22,3 | | | |
| A8 | | | | | | | | 22,2 |

Die Antidröhnmassen wurden jeweils mit einem Dissolverrüher bei 1000 U/min kurz zusammengerührt. Danach im Speedmixer (10s 800 U/min, 10s 1200 U/min, 10s 1500 U/min, 30s 2500 U/min) gemischt. Nach 24h Ruhezeit wurde der Ansatz nochmal mit demselben Programm im Speedmixer gemischt und dann weiterverarbeitet. Die Trocknung erfolgte für 15 Min bei Raumtemperatur und 30 Min bei 160°C.

Beschreibung der Mischaggregate:

Speedmixer: Es kommt ein SpeedMixer DAC 400FVZ der Firma Hausschild zum Einsatz.
Dissolverrührer: Die Apparatur besteht aus einem Rührwerk, einer damit angetriebenen Welle sowie einer Dissolverscheibe als Rührwerkzeug.

Anwendungstechnische Prüfungen

Bestimmung der Wasseraufnahme:
Die Bestimmung der Wasseraufnahme wird in Anlehnung an die DIN EN ISO 62:2008 durchgeführt. Dazu werden von den erstellten Antidröhnmassen A1 bis A10 Filme einer Stärke von ca. 2 mm und einer Seitenlänge von je 25 mm hergestellt. Die Filme werden 30 min bei 160°C getrocknet und 24h beziehungsweise 7 Tage in demineralisiertem Wasser gelagert. Bestimmt wird die relative Massezunahme bei Lagerung in Prozent.

Die Ergebnisse sind in folgender Tabelle dargestellt:

Tabelle 3: Ergebnisse anwendungstechnischer Prüfungen

| | Wasseraufnahme 1d | Wasseraufnahme 7d |
|---|---|---|
| A1 (P1)[1)] | 22 - 23% | 27 - 31% |
| A2 (PA1) | 12 - 15% | 19 - 20% |
| A3 (P2) [1)] | 14% | 18% |
| A4 (P3) [1)] | 25% | 29% |
| A5 (PA3) | 13% | 16% |
| A6 (P4) [1)] | 9% | 12% |
| A7 (P5) [1)] | 9% | 13% |
| A8 (PA4) | 8% | 9% |
| [1)] nicht erfindungsgemäße Vergleichsprobe | | |

Die Biegeschwingungen der Proben A1, A2 und A3 wurden nach DIN EN ISO 6721-3 bestimmt und sind in Figur 1 dargestellt. Figur 1 zeigt den Verlustfaktor der Biegeschwingung in Abhängigkeit von der Temperatur für die nicht erfindungsgemäße Antidröhnmasse A1 mit nicht iminertem Polymer P1, für die erfindungsgemäße Antidröhnmasse A2 mit iminertem Polymer PA2 und für die nicht erfindungsgemäße Antidröhnmasse A3 mit nicht iminertem, chemisch vernetzten Polymer P2.

Es zeigt sich, dass alle Massen, die mit den erfindungsgemäß synthetisierten Dispersionen PA1, PA3 und PA4 hergestellt wurden, zum Teil deutlich geringere Wasseraufnahmen sowohl nach einem Tag als auch nach einer Woche zeigen als die mit den nicht mit Aziridin umgesetzten Ausgangsdispersionen P1, P3 und P4. Außerdem zeigt sich ein deutlich geringerer Einfluss auf die Biegeschwingungseigenschaften der hergestellten Antidröhnmassen im Vergleich zu Massen die mit Vernetzern funktionalisierten Polymeren P2 und P5 hergestellt wurden, die ebenfalls verringerte Wasseraufnahmen zeigen. Bei diesen ist aber eine deutliche Verringerung des Maximums, sowie der Breite auf halber Höhe der Biegeschwingungskurve feststellbar.

Die Ergebnisse zeigen, dass

1) die Wasseraufnahme durch Einführung von Polyethyleniminseitenketten signifikant verringert wird;
2) eine gute Dämpfung erzielt wird, obwohl die Einführung der Polyethylenimingruppen zu einer Vernetzung führt und bei Vernetzung in der Regel eine Herabsetzung der Dämpfung zu erwarten wäre (wie z.B. bei dem DAAM/ADDH-System in Beispiel A3);
3) durch Einführung von Polyethyleniminseitenketten keine signifikante Viskositätserhöhung beobachtet wird, obwohl Polyethylenimine in der Regel wasserlösliche Verdicker sind, für die eine starke Viskositätserhöhung zu erwarten wäre.

**Patentansprüche**

1. Verwendung einer Polymerdispersion zur Herstellung von Antidröhnmassen, wobei die Polymerdispersion mindestens ein Polymer enthält welches erhältlich ist durch Emulsionspolymerisation von radikalisch polymerisierbaren Monomeren und das Polymer Alkyleniminseitenketten aufweist, wobei die Alkyleniminseitenketten eine oder mehrere Alkylenimineinheiten aufweisen.

2. Verwendung nach Anspruch 1, **dadurch gekennzeichnet, dass** das Polymer Säuregruppenaufweist, und die Säuregruppen zumindest teilweise durch Umsetzung mit mindestens einem cyclischen Imin, ausgewählt aus Aziridin und Methylaziridin substituiert sind mit Ethylenimin oder Propylenimin.

3. Verwendung gemäß dem vorhergehenden Anspruch, **dadurch gekennzeichnet, dass** die Umsetzung der Säuregruppen mit cyclischem Imin im Molverhältnis von Säuregruppen zur Gesamtmenge von Aziridin und Methylaziridin von 0,1 bis 3 erfolgt ist.

4. Verwendung nach einem der vorhergehenden Ansprüche, **dadurch gekennzeichnet, dass** die Alkyleniminseitenketten die allgemeine Formel $-(CH_2-CH_2-NH)_x-CH_2-CH_2-NH_2$ aufweisen, wobei x ein Zahlenwert von 0 bis 4 ist.

5. Verwendung nach einem der vorhergehenden Ansprüche, **dadurch gekennzeichnet, dass** das durch Emulsionspolymerisation erhältliche Polymer zu mindestens 60 Gew.-% aufgebaut ist aus Hauptmonomeren, welche ausgewählt sind aus Alkyl(meth)acrylaten mit 1-20 C-Atomen in der Alkylgruppe, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, wobei sich die Mengenangaben auf die Summe aller Monomere des Polymer vor der Derivatisierung mit den Alkyleniminseitenketten bezieht.

6. Verwendung gemäß dem vorhergehenden Anspruch, **dadurch gekennzeichnet, dass** das Polymer zu mindestens 60 Gew. % aus Alkyl(meth)acrylaten mit 1 bis 10 C-Atomen in der Alkylgruppe aufgebaut ist.
wobei sich die Mengenangaben auf die Summe aller Monomere des Polymer vor der Derivatisierung mit den Alkyyleniminseitenketten bezieht.

7. Verwendung gemäß einem der vorhergehenden Ansprüche, **dadurch gekennzeichnet, dass** das Polymer aufgebaut ist aus

(a) 25 bis 75 Gew.% mindestens eines Monomeren, welches, wenn es als Homopolymer polymerisiert ist, eine Glasübergangstemperatur von kleiner als 0°C, vorzugsweise von kleiner als -20°C aufweist;
(b) 24 bis 70 Gew.% mindestens eines Monomeren, welches, wenn es als Homopolymer polymerisiert ist, eine Glasübergangstemperatur von größer als 0°C, vorzugsweise von größer als 50°C aufweist; und
(c) 0,3 bis 5 Gew.% mindestens eines von den Monomeren (a) und (b) verschiedenen Monomeren mit mindestens einer Säuregruppe,

wobei sich die Mengenangaben auf die Summe aller Monomere des Polymer vor der Derivatisierung mit den Alkyleniminseitenketten bezieht.

8. Verwendung gemäß einem der vorhergehenden Ansprüche, **dadurch gekennzeichnet, dass** das Polymer aufgebaut ist aus

(a) 25 bis 75 Gew.% n-Butylacrylat,
(b) 24 bis 70 Gew.% Methyl(meth)acrylat,
(c) 0,3 bis 3 Gew.% mindestens eines Säuremonomers ausgewählt aus Acrylsäure, Methacrylsäure und deren Gemisch.

wobei sich die Mengenangaben auf die Summe aller Monomere des Polymer vor der Derivatisierung mit den Alkyleniminseitenketten bezieht.

9. Verwendung nach einem der vorherigen Ansprüche, **dadurch gekennzeichnet, dass** die Glasübergangstemperatur des durch Emulsionspolymerisation hergestellten Polymers im Bereich von -60 °C bis kleiner oder gleich +70 °C liegt, wobei die Glasübergangstemperatur als sogenannte "midpoint temperature" durch Differential Scanning Calorimetrie bestimmt wird.

10. Verwendung nach einem der vorherigen Ansprüche, **dadurch gekennzeichnet, dass** bei der Emulsionspolymerisation Molekulargewichtsregler in einer Menge von weniger als 0,6 Gewichtsteilen auf 100 Gewichtsteile Monomere oder keine Molekulargewichtsregler eingesetzt werden; und/oder dass die Emulsionspolymerisation bei Temperaturen kleiner 90 °C durchgeführt wird; und/oder dass bei der Emulsionspolymerisation Initiatoren in einer Menge von 0,1 bis weniger als 0,8 Gewichtsteilen auf 100 Gewichtsteile Monomere eingesetzt werden; und/oder bei der

Emulsionspolymerisation vernetzende Monomere in einer Menge von weniger als 0,2 Gewichtsteilen auf 100 Gewichtsteile Monomere oder keine vernetzende Monomere eingesetzt werden.

**11.** Antidröhnmasse, enthaltend

(i) eine Polymerdispersion mit den Merkmalen gemäß einem der vorhergehenden Ansprüche;
(ii) anorganische Füllstoffe; und
(iii) optional organische Füllstoffe.

**12.** Antidröhnmasse gemäß dem vorhergehenden Anspruch, enthaltend

(a) 5 bis 50 Gew.% der Polymerdispersion, wobei sich die Mengenangabe auf den Feststoffgehalt der Polymerdispersion bezieht,
(b) 40 bis 80 Gew.% anorganische Füllstoffe,
(c) 0 bis 40 Gew.% organische Füllstoffe,
(d) 10 bis 40 Gew.% Wasser und
(e) 0 bis 10 Gew.% Hilfsstoffe.

**13.** Antidröhnmasse nach einem der beiden vorhergehenden Ansprüche, **dadurch gekennzeichnet, dass** die anorganischen Füllstoffe ausgewählt sind aus Kaolin, Kreide, Bariumsulfat, Ruß, Graphit, Talkum, Tonmineralien, Mikrodolomit, Quarzmehl und Glimmer; die organischen Füllstoffe ausgewählt sind aus Pulverlacken, Polymerpulvern aus zum Beispiel gemahlenen Ethylen/Vinylacetat Copolymer-Festharzen, getrockneten Acrylatdispersionen und Polysaccharide; und die Hilfsstoffe zu mindestens 0,1 Gew.% eingesetzt werden und ausgewählt sind aus Verdickungsmitteln, Harzen, Weichmachern, Dispergiermitteln, Cosolventien, Stabilisatoren, Benetzungsmitteln, Konservierungsstoffen, Schauminhibitoren, Glas- oder Kunststoffperlen, Glas- oder Kunststoffhohlkörpern, Gefrierschutzmitteln, Antioxidantien, UV-Absorbern, Emulgatoren, Siloxanen, organisch modifizierten Siloxanen und Antistatika.

**14.** Verwendung einer Antidröhnmasse nach einem der Ansprüche 11 bis 13 zur Schwingungsdämpfung von Karosserieteilen eines Fahrzeugs oder als Masse für Unterbodenschutz eines Kraftfahrzeugs.

**15.** Verfahren zur Dämpfung von Vibrationen oder Schwingungen von Bauteilen von Fahrzeugen, wobei

(1) eine Antidröhnmasse gemäß einem den Ansprüche 11 bis 13 zur Verfügung gestellt wird, und
(2) die Antidröhnmasse auf ein Bauteil eines Fahrzeuges aufgebracht und getrocknet wird.

## Claims

**1.** The use of a polymer dispersion for producing sound deadener compositions, the polymer dispersion comprising at least one polymer obtainable by emulsion polymerization of radically polymerizable monomers, and the polymer having alkyleneimine side chains, the alkyleneimine side chains having one or more alkyleneimine units.

**2.** The use according to claim 1, wherein the polymer has acid groups, and the acid groups are substituted at least partly through reaction with at least one cyclic imine, selected from aziridine and methylaziridine, with ethyleneimine or propyleneimine.

**3.** The use according to the preceding claim, wherein the reaction of the acid groups with cyclic imine has taken place in a molar ratio of acid groups to the total amount of aziridine and methylaziridine of 0.1 to 3.

**4.** The use according to any of the preceding claims, wherein the alkyleneimine side chains have the general formula $-(CH_2-CH_2-NH)_x-CH_2-CH_2-NH_2$, where x is a numerical value from 0 to 4.

**5.** The use according to any of the preceding claims, wherein the polymer obtainable by emulsion polymerization is composed to an extent of at least 60 wt% of principal monomers which are selected from alkyl (meth)acrylates having 1-20 C atoms in the alkyl group, vinyl esters of carboxylic acids comprising up to 20 C atoms, vinylaromatics having up to 20 C atoms, ethylenically unsaturated nitriles, vinyl halides, vinyl ethers of alcohols comprising 1 to 10 C atoms, aliphatic hydrocarbons having 2 to 8 C atoms and one or two double bonds or mixtures of these monomers,

the quantity figures being based on the sum of all monomers of the polymer before the derivatization with the alkyleneimine side chains.

6. The use according to the preceding claim, wherein the polymer is composed to an extent of at least 60 wt% of alkyl (meth) acrylates having 1 to 10 C atoms in the alkyl group,
the quantity figures being based on the sum of all monomers of the polymer before the derivatization with the alkyleneimine side chains.

7. The use according to any of the preceding claims, wherein the polymer is composed of

(a) 25 to 75 wt% of at least one monomer which when polymerized as a homopolymer has a glass transition temperature of less than 0°C, preferably of less than -20°C;
(b) 24 to 70 wt% of at least one monomer which when polymerized as a homopolymer has a glass transition temperature of greater than 0°C, preferably of greater than 50°C; and
(c) 0.3 to 5 wt% of at least one monomer different from the monomers (a) and (b) and having at least one acid group,

the quantity figures being based on the sum of all monomers of the polymer before the derivatization with the alkyleneimine side chains.

8. The use according to any of the preceding claims, wherein the polymer is composed of

(a) 25 to 75 wt% of n-butyl acrylate,
(b) 24 to 70 wt% of methyl (meth)acrylate,
(c) 0.3 to 3 wt% of at least one acid monomer selected from acrylic acid, methacrylic acid, and a mixture thereof,

the quantity figures being based on the sum of all monomers of the polymer before the derivatization with the alkyleneimine side chains.

9. The use according to any of the preceding claims, wherein the glass transition temperature of the polymer prepared by emulsion polymerization is in the range from -60°C to less than or equal to +70°C, the glass transition temperature being determined as midpoint temperature by Differential Scanning Calorimetry.

10. The use according to any of the preceding claims, wherein molecular weight modifiers are used in the emulsion polymerization in an amount of less than 0.6 part by weight per 100 parts by weight of monomers, or no molecular weight modifiers are used; and/or wherein the emulsion polymerization is carried out at temperatures of less than 90°C; and/or wherein initiators are used in the emulsion polymerization in an amount of 0.1 to less than 0.8 part by weight per 100 parts by weight of monomers; and/or crosslinking monomers are used in the emulsion polymerization in an amount of less than 0.2 part by weight per 100 parts by weight of monomers, or no crosslinking monomers are used.

11. A sound deadener composition, comprising

(i) a polymer dispersion having the features according to any of the preceding claims;
(ii) inorganic fillers; and
(iii) optionally organic fillers.

12. The sound deadener composition according to the preceding claim, comprising

(a) 5 to 50 wt% of the polymer dispersion, the quantity figure being based on the solids content of the polymer dispersion,
(b) 40 to 80 wt% of inorganic fillers,
(c) 0 to 40 wt% of organic fillers,
(d) 10 to 40 wt% of water, and
(e) 0 to 10 wt% of auxiliaries.

13. The sound deadener composition according to either of the two preceding claims, wherein the inorganic fillers are selected from kaolin, chalk, barium sulfate, carbon black, graphite, talc, clay minerals, microdolomite, finely ground

quartz, and mica; the organic fillers are selected from powder coating materials, polymer powders of, for example, ground solid ethylene/vinyl acetate copolymer resins, dried acrylate dispersions, and polysaccharides; and the auxiliaries are used at not less than 0.1 wt% and are selected from thickeners, resins, plasticizers, dispersants, cosolvents, stabilizers, wetting agents, preservatives, foam inhibitors, glass beads or plastics beads, hollow glass or plastics bodies, antifreeze agents, antioxidants, UV absorbers, emulsifiers, siloxanes, organically modified siloxanes, and antistats.

**14.** The use of a sound deadener composition according to any of claims 11 to 13 for vibration damping of bodywork parts of a vehicle or as a composition for underbody protection of a motor vehicle.

**15.** A method for damping vibrations or oscillations of vehicle components, where

(1) a sound deadener composition according to any of claims 11 to 13 is provided, and
(2) the sound deadener composition is applied to a vehicle component and dried.

**Revendications**

**1.** Utilisation d'une dispersion de polymère pour la préparation de masses anti-vrombissement, la dispersion de polymère contenant au moins un polymère qui peut être obtenu par polymérisation en émulsion de monomères polymérisables de manière radicalaire et le polymère présentant des chaînes latérales de type alkylèneimine, les chaînes latérales de type alkylèneimine présentant un ou plusieurs motifs alkylèneimine.

**2.** Utilisation selon la revendication 1, **caractérisée en ce que** le polymère présente des groupes acide, et les groupes acide sont au moins partiellement substitués par transformation avec au moins une imine cyclique, choisie parmi l'aziridine et la méthylaziridine, avec l'éthylèneimine ou la propylèneimine.

**3.** Utilisation selon la revendication précédente, **caractérisée en ce que** la transformation des groupes acide avec une imine cyclique est réalisée avec un rapport molaire de groupes acide sur la quantité totale d'aziridine et de méthylaziridine de 0,1 à 3.

**4.** Utilisation selon l'une quelconque des revendications précédentes, **caractérisée en ce que** les chaînes latérales de type alkylèneimine présentent la formule générale $-(CH_2-CH_2-NH)_x-CH_2-CH_2-NH_2$, x étant une valeur numérique de 0 à 4.

**5.** Utilisation selon l'une quelconque des revendications précédentes, **caractérisée en ce que** le polymère pouvant être obtenu par polymérisation en émulsion est construit avec au moins 60 % en poids de monomères principaux qui sont choisis parmi des (méth)acrylates d'alkyle comportant 1 à 20 atomes de C dans le groupe alkyle, des esters de vinyle d'acides carboxyliques contenant jusqu'à 20 atomes de C, des composés aromatiques vinyliques comportant jusqu'à 20 atomes de C, des nitriles éthyléniquement insaturés, des halogénures vinyliques, des éthers vinyliques d'alcools contenant 1 à 10 atomes de C, des hydrocarbures aliphatiques comportant 2 à 8 atomes de C et une ou deux doubles liaisons ou des mélanges de ces monomères, les données quantitatives se rapportant à la somme de tous les monomères du polymère avant la dérivatisation avec les chaînes latérales de type alkylèneimine.

**6.** Utilisation selon la revendication précédente, **caractérisée en ce que** le polymère est construit avec au moins 60 % en poids de (méth)acrylates d'alkyle comportant 1 à 10 atomes de C dans le groupe alkyle, les données quantitatives se rapportant à la somme de tous les monomères du polymère avant la dérivatisation avec les chaînes latérales de type alkylèneimine.

**7.** Utilisation selon l'une quelconque des revendications précédentes, **caractérisée en ce que** le polymère est construit à partir de

(a) 25 à 75 % en poids d'au moins un monomère qui, lorsqu'il est polymérisé en tant qu'homopolymère, présente une température de transition vitreuse inférieure à 0 °C, de préférence inférieure à -20 °C ;
(b) 24 à 70 % en poids d'au moins un monomère qui, lorsqu'il est polymérisé en tant qu'homopolymère, présente une température de transition vitreuse supérieure à 0 °C, de préférence supérieure à 50 °C ; et
(c) 0,3 à 5 % en poids d'au moins un monomère différent des monomères (a) et (b) comportant au moins un groupe acide,

les données quantitatives se rapportant à la somme de tous les monomères du polymère avant la dérivatisation avec les chaînes latérales de type alkylèneimine.

**8.** Utilisation selon l'une quelconque des revendications précédentes, **caractérisée en ce que** le polymère est construit à partir de

(a) 25 à 75 % en poids d'acrylate de n-butyle,
(b) 24 à 70 % en poids de (méth)acrylate de méthyle,
(c) 0,3 à 3 % en poids d'au moins un monomère d'acide choisi parmi l'acide acrylique, l'acide méthacrylique et leur mélange,

les données quantitatives se rapportant à la somme de tous les monomères du polymère avant la dérivatisation avec les chaînes latérales de type alkylèneimine.

**9.** Utilisation selon l'une quelconque des revendications précédentes, **caractérisée en ce que** la température de transition vitreuse du polymère préparé par polymérisation en émulsion se situe dans la plage de -60 °C à inférieure ou égale à +70 °C, la température de transition vitreuse étant déterminée comme ladite « température de point milieu » par calorimétrie différentielle à balayage.

**10.** Utilisation selon l'une quelconque des revendications précédentes, **caractérisée en ce que** lors de la polymérisation en émulsion, des régulateurs de poids moléculaire sont utilisés en une quantité inférieure à 0,6 partie en poids pour 100 parties en poids de monomères, ou aucun régulateur de poids moléculaire n'est utilisé ; et/ou **en ce que** la polymérisation en émulsion est mise en œuvre à des températures inférieures à 90 °C ; et/ou **en ce que** lors de la polymérisation en émulsion des initiateurs sont utilisés en une quantité de 0,1 à moins de 0,8 partie en poids pour 100 parties en poids de monomères ; et/ou lors de la polymérisation en émulsion, des monomères réticulants sont utilisés en une quantité de moins de 0,2 partie en poids pour 100 parties en poids de monomères, ou aucun monomère réticulant n'est utilisé.

**11.** Masse anti-vrombissement, contenant

(i) une dispersion de polymère dotée des caractéristiques selon l'une quelconque des revendications précédentes ;
(ii) des charges inorganiques ; et
(iii) éventuellement des charges organiques.

**12.** Masse anti-vrombissement selon la revendication précédente, contenant

(a) 5 à 50 % en poids de la dispersion de polymère, la donnée quantitative se rapportant à la teneur en solides de la dispersion de polymère,
(b) 40 à 80 % en poids de charges inorganiques,
(c) 0 à 40 % en poids de charges organiques,
(d) 10 à 40 % en poids d'eau et
(e) 0 à 10 % en poids de substances auxiliaires.

**13.** Masse anti-vrombissement selon l'une des deux revendications précédentes, **caractérisée en ce que** les charges inorganiques sont choisies parmi le kaolin, la craie, le sulfate de baryum, la suie, le graphite, le talc, les minéraux argileux, la microdolomite, la farine de quartz et le mica ; les charges organiques sont choisies parmi les peintures en poudre, les poudres de polymère composées par exemple de résines solides broyées de copolymère d'éthylène/acétate de vinyle, des dispersions séchées d'acrylate et des polysaccharides ; et les substances auxiliaires sont utilisées à raison d'au moins 0,1 % en poids et sont choisies parmi des épaississants, des résines, des plastifiants, des agents dispersants, des cosolvants, des stabilisants, des agents mouillants, des conservateurs, des inhibiteurs de mousse, des perles de verre ou de plastique, des corps creux de verre ou de plastique, des antigels, des antioxydants, des absorbants UV, des émulsifiants, des siloxanes, des siloxanes organomodifiés et des antistatiques.

**14.** Utilisation d'une masse anti-vrombissement selon l'une quelconque des revendications 11 à 13 pour l'amortissement des oscillations de pièces de carrosserie d'un véhicule ou en tant que masse pour la protection du bas de caisse d'un véhicule à moteur.

**15.** Procédé pour l'amortissement de vibrations ou d'oscillations de pièces de véhicules,

(1) une masse anti-vrombissement selon l'une quelconque des revendications 11 à 13 étant mise à disposition, et
(2) la masse anti-vrombissement étant appliquée et séchée sur une pièce d'un véhicule.

Figur 1

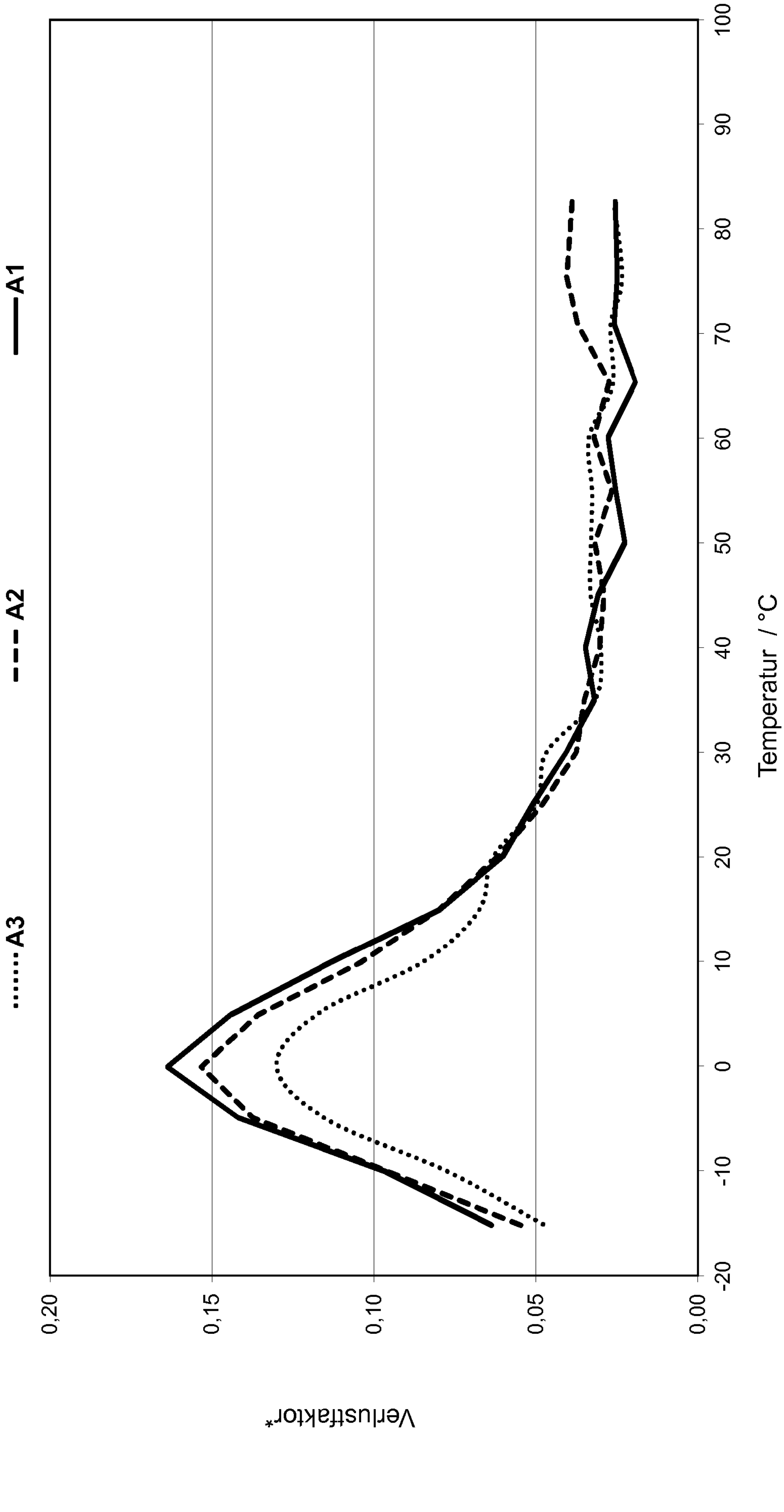
A3
A2
A1
Verlustfaktor*
0,00
0,05
0,10
0,15
0,20
Temperatur / °C
-20
-10
0
10
20
30
40
50
60
70
80
90
100

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20040033354 A
- US 6502821 B
- EP 1520865 A
- WO 2007034933 A
- EP 2420412 A
- WO 2012010632 A
- WO 2015018665 A
- WO 2015086465 A
- JP 7292318 A
- DE 19954619


### In der Beschreibung aufgeführte Nicht-Patentliteratur


- *Journal of Materials Science,* 2001, vol. 36, 5733-5737
- **W. MÄCHTLE.** *Makromolekulare Chemie,* 1984, vol. 185, 1025-1039
- Makromolekulare Stoffe. **HOUBEN-WEYL.** Methoden der organischen Chemie. Georg-Thieme-Verlag, 1961, vol. XIV/1, 411-420
- Makromolekulare Stoffe. **HOUBEN-WEYL.** Methoden der organischen Chemie. Georg Thieme Verlag, 1961, vol. 14/1, 192-208
- **T.G. FOX.** *Bull. Am. Phys. Soc.,* 1956, vol. 1, 123
- Ullmann's Enzyklopädie der technischen Chemie. 1980, 17, , 18
- Ullmann's Encyclopedia of Industrial Chemistry. VCH, 1992, vol. A 21, 169
- **J. BRANDRUP ; E.H. IMMERGUT.** Polymer Handbook. J. Wiley, 1989